(19) Europäisches Patentamt
European Patent Office
Office européen des brevets

(11) **EP 2 924 658 A1**

(12) **EUROPEAN PATENT APPLICATION**

(43) Date of publication:
**30.09.2015  Bulletin 2015/40**

(21) Application number: **14461520.0**

(22) Date of filing: **28.03.2014**

(51) Int Cl.:
*G06T 9/00* (2006.01)         *H04N 19/59* (2014.01)
*H04N 19/85* (2014.01)       *H04N 19/132* (2014.01)
*H04N 19/182* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Patents Factory Ltd. Sp. z o.o.**
**65-043 Zielona Gora (PL)**

(72) Inventors:
• **Paczkowski, Jacek**
  **65-043 Zielona Gora (PL)**
• **Kramek, Krzysztof**
  **65-043 Zielona Gora (PL)**
• **Nalewa, Tomasz**
  **65-043 Zielona Gora (PL)**

(74) Representative: **Pawlowski, Adam**
**Eupatent.PL**
**ul. Zeligowskiego 3/5**
**90-752 Lodz (PL)**

Remarks:
Amended claims in accordance with Rule 137(2) EPC.

(54) **A method and system for reducing video resolution**

(57)     A method for reducing video resolution, comprising the steps of processing frames of the video sequence by: creating a details bitmap (D), having values of pixels dependent on the amount of details at a particular area of the video frame; creating a net (N) of regularly distributed nodes and deforming the position of nodes according to the contents of the details bitmap (D) such that the nodes are brought closer to each other at the places wherein the details bitmap (D) indicates higher amount of details; morphing the frame to a modified frame (PB') using morphing based on the net N; and scaling down the modified frame (PB') to obtain a reduced frame (PB").

101 Perform motion analysis of frame P

102 Create motion bitmap M

103 Blur input bitmap P to obtain blurred frame PB

104 Detect high frequencies in PB

105 Create details bitmap D

106 Create net N

107 Deform net N

108 Convert PB to modified PB' using morphing based on net N

109 Scale down PB' to reduced PB" using kx and ky

110 Compress PB" as PBC and store it with kx, ky and N

**Fig. 1**

EP 2 924 658 A1

## Description

The present invention relates to a method and system for reducing video resolution.

There are known various methods for processing images, in particular to reduce image resolution.

A PCT application WO2013017565 presents a method for transmitting a high resolution video stream comprising high resolution video frames as low resolution video stream comprising low resolution video frames, comprising the steps of: defining a size of a region for dividing the high resolution video frames into equally-sized adjacent regions, processing the high resolution video frames in sets, each set containing a number of frames equal to the number of pixels within the region, wherein within the set: converting the first high resolution video frame of the set to a first low resolution video frame by copying the first pixel of each region to the first low resolution video frame to a position defined by a split function dependent on the pixel position in the high resolution video frame and the size of the region, converting the next high resolution video frame of the set to a next low resolution video frame by copying the next pixel of each region to the next low resolution video frame to a position defined by the split function, until all high resolution video frames of the set are converted to low resolution video frames; and transmitting the low resolution video stream comprising the low resolution video frames as a representation of the high resolution video stream comprising the high resolution video frames. The conversion is carried out in the same manner for all frames.

It would be advantageous to provide an alternative method for reducing resolution of an image, that takes into account the contents of the frame.

The object of the invention is a method for reducing video resolution, comprising the steps of processing frames of the video sequence by: creating a details bitmap (D), having values of pixels dependent on the amount of details at a particular area of the video frame; creating a net (N) of regularly distributed nodes and deforming the position of nodes according to the contents of the details bitmap (D) such that the nodes are brought closer to each other at the places wherein the details bitmap (D) indicates higher amount of details; morphing the frame to a modified frame (PB') using morphing based on the net N; and scaling down the modified frame (PB') to obtain a reduced frame (PB").

Preferably, the method further comprises analyzing the input frame (P) of the video sequence to create a motion bitmap (M) having the same resolution as the input frame (P) and values of pixels proportional to the dynamics of movement of pixels of the input frame (P); blurring the input frame (P) such that the amount of blurring particular pixels depends on the values of corresponding pixels of motion bitmap (M) to obtain a blurred frame (PB); and creating the details bitmap (D) based on the blurred frame (PB).

Preferably, the details bitmap (D) is created us-

ing a formula:

$$D_{(x,y)} = \sum_{i=1}^{n} \sum_{j=1}^{n} a_{ij} * H_{ij}$$

wherein:

n is a size of a matrix;
$H_{i,j}$ is a matrix of FFT coefficients;
$a_{i,j}$ is a matrix comprising weight coefficients.

Preferably, the modified frame (PB') is scaled down to obtain a reduced frame (PB") using a scaling coefficient (kx) for x axis different from a scaling coefficient (ky) for the y axis.

Preferably, the method further comprises compressing the reduced bitmap (PB") to obtain a compressed bitmap PBC.

The object of the invention is also a computer program comprising program code means for performing all the steps of the computer-implemented method as described above when said program is run on a computer, as well as a computer readable medium storing computer-executable instructions performing all the steps of the computer-implemented method as described above when executed on a computer.

Another object of the present invention is a computer-implemented system for s reducing video resolution, the system comprising a controller configured to process frames of the video sequence by: creating a details bitmap (D), having values of pixels dependent on the amount of details at a particular area of the video frame; creating a net (N) of regularly distributed nodes and deforming the position of nodes according to the contents of the details bitmap (D) such that the nodes are brought closer to each other at the places wherein the details bitmap (D) indicates higher amount of details; morphing the frame to a modified frame (PB') using morphing based on the net N; and scaling down the modified frame (PB') to obtain a reduced frame (PB").

These and other objects presented herein are accomplished by providing a method and a system for reducing resolution of an image. Further details and features of the present invention, its nature and various advantages will become more apparent from the following detailed description of the preferred embodiments shown in a drawing, in which:

Fig. 1 presents an example embodiment of a method for reducing resolution of an image.
Fig. 2 presents an example embodiment of a method for displaying the reduced image,
Fig. 3 present a system for reducing resolution of a video.
Fig. 4A-4F present examples of matrices for creating the bitmap D.
Fig. 5A, 5B present a net N.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

DESCRIPTION OF EMBODIMENTS

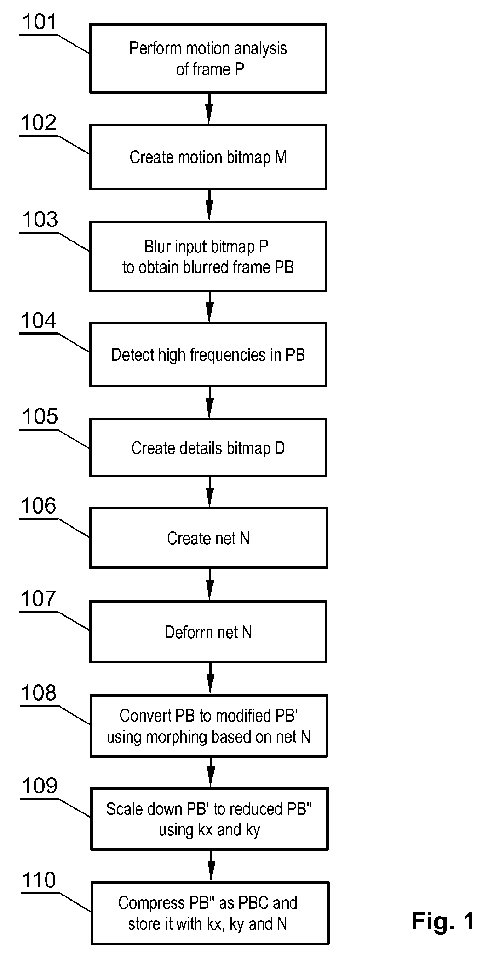

Fig. 1 shows an example embodiment of a method for reducing resolution of an image. The procedure is applied for consecutive frames the video sequence.

First, in step 101, there is performed motion analysis in the current video frame represented by image (bitmap) P, i.e. analysis of which pixels have changed their position with respect to the previous frame. Next, in step 102, a motion bitmap M is created, having the same resolution as the input frame P, wherein the values of pixels of M are proportional to the dynamics of movement of that pixels (for example, the value of pixel is proportional to the speed of movement of object to which the pixel belongs, wherein the speed of movement is calculated based on analysis of movement of that object on the current frame compared to one or more previous frames). If a pixel is static, then its value on bitmap M is 0. Next, in step 103, the input bitmap P is blurred to generate a blurred bitmap PB. The amount of blurring of particular pixels of bitmap P depends on the values of corresponding pixels of motion bitmap M - the faster motion at a particular position, the more this position is blurred. Next, in step 104, the blurred image PB is analyzed to detect the areas with high amount of details, by performing detection of high frequencies. In step 105, a details bitmap D is created, having values of pixels dependent on the amount of details at a particular area.

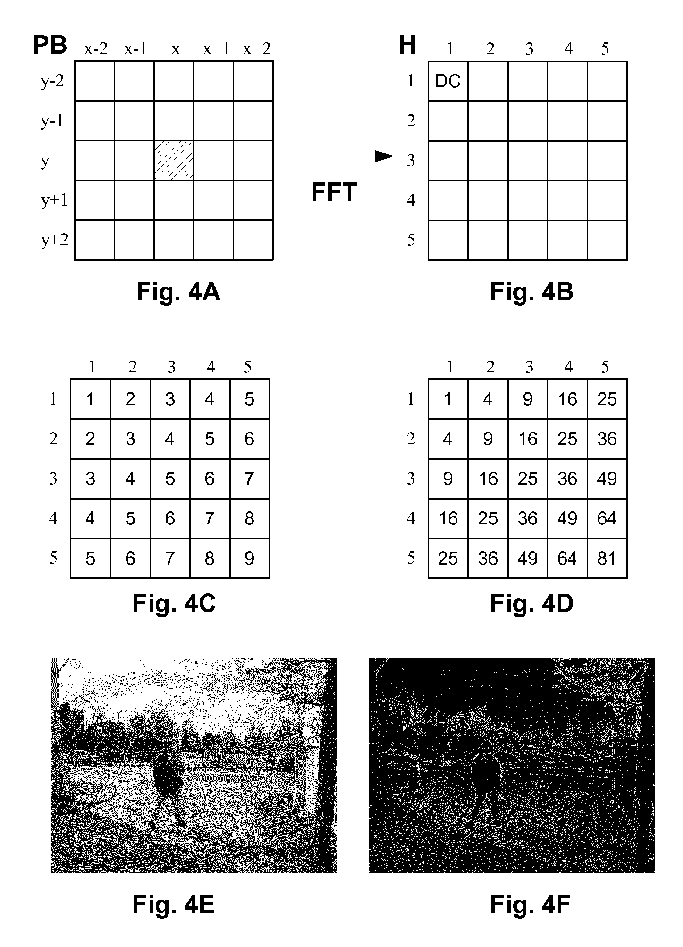

For example, each pixel of bitmap D is created by taking into account the values of neighboring pixels of that pixels on the PB bitmap, for example 24 neighboring pixels as shown in Fig. 4A. This fragment of the PB bitmap is then transformed using Fast Fourier Transform (FFT) to a H matrix, shown in Fig. 4B.

Next, the values of pixels of bitmap D are calculated using formula:

$$D_{(x,y)} = \sum_{i=1}^{5} \sum_{j=1}^{5} a_{ij} * H_{ij}$$

wherein $a_{i,j}$ is a matrix comprising weight coefficients which promote the high frequency components of the H matrix. Fig. 4C shows an example of the $a_{i,j}$ matrix with linear increase of coefficients, and Fig. 4D shows an example of the $a_{i,j}$ matrix wherein the values are squared.

If a matrix of dimensions of 5x5 is used, then the first 2 rows and columns of the D bitmap can be determined by copying there the values of row no. 3 and column no. 3 calculated according to the above formula. Similarly, the last 2 rows and columns of the D bitmap can be determined by copying there the values of row no. last-3 and column no. last-3 calculated according to the above formula. Fig. 4E presents an example of an input frame P and fig. 4F presents an example of the corresponding bitmap D.

It will be understood that matrices of different sized, such as 3x3, 7x7 etc. can be used as well.

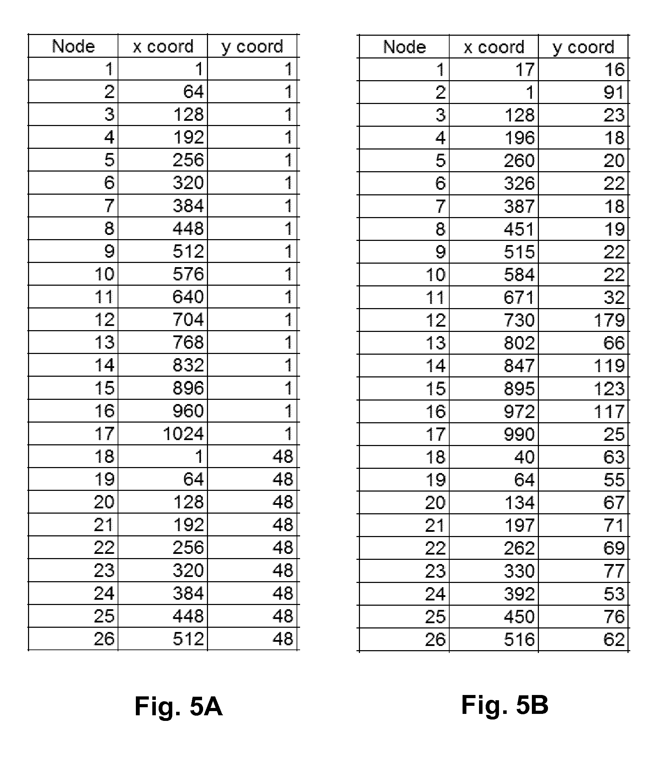

Next, in step 106, a net N is created, which is a table defining position of net nodes, which are regularly distributed across the image. For example, for a 1920x1080 frame, the net N may have 21 x21 nodes. It means that a node will be placed at every 96th pixel in the horizontal axis and at every 54th pixel in the vertical axis. Fig. 5A presents an example of the net N.

In step 107 the net N is deformed according to the contents of the bitmap D. The nodes are brought closer to each other at the places wherein the bitmap D has large values and further away from each other at the places wherein the bitmap D has small values. Fig. 5B presents an example of the deformed net N.

In step 108 the frame PB is converted to a modified frame PB' having the same resolution, using a morphing technique based on the net N. The modified frame PB' shall have less high frequencies than frame PB, because the areas with high frequencies are stretched and areas without high frequencies are compacted.

Next, in step 109, the modified frame PB' is scaled down to obtain a reduced frame PB". Scaling can be performed with different factors for x and y axis. The scaling coefficient kx, ky is selected depending on the contents of bitmap D in the x and y direction and the expected quality after decoding.

In step 110 the reduced bitmap PB" is compressed to obtain a compressed bitmap PBC and the definition of net N and scaling coefficients kx, ky are added to and stored as a scaled-down representation f_PBC.

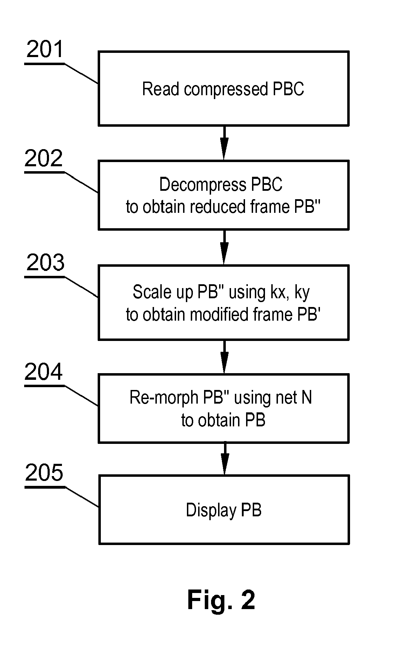

Fig. 2 shows the procedure for decoding the compressed representation f_PBC. First, the compressed bitmap PBC is read in step 201. Next, PBC is decompressed in step 202 to obtain the reduced frame PB". In step 203 the reduced frame PB" is scaled up using coefficients kx, ky to obtain the modified frame PB'. In step 204 re-morphing of the modified frame PB' is performed using the net N to obtain the frame PB. Next, frame PB is displayed in step 205.

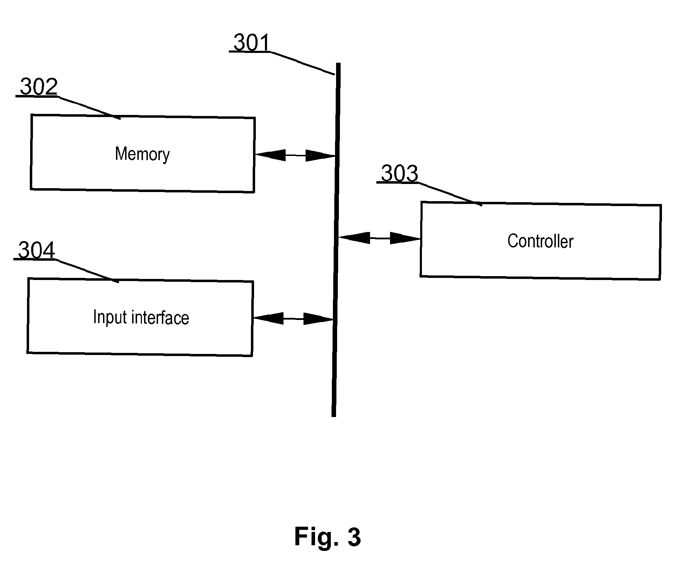

Fig. 3 shows a system for reducing video resolution. The system may be implemented by using programmable logic circuits such as PGA (Programmable Gate Array), FPGA (Field-Programmable Gate Array) or ASIC (Application-Specific Integrated Circuit) or SoC (System on the Chip). The system comprises a suitable data bus 301 for communicating, preferably bidirectionally, all circuits of the system. Further, the system comprises a memory 302 for storing required software for the controller 303 and any temporary data needed for operation of the system, such as the video stream and image data bitmaps. The controller 303 is configured to execute software that allows for reducing image resolution, wherein such software is configured to execute the method steps of Fig. 1. A user interface (304) allows the user to control the process.

The presented method and system can be used in applications such as video surveillance systems, digital television systems, streaming video systems etc.

It can be easily recognized, by one skilled in the art, that the aforementioned method for reducing image resolution may be performed and/or controlled by one or more computer programs. Such computer programs are typically executed by utilizing the computing resources in a computing device such as personal computers, personal digital assistants, cellular telephones, dedicated controllers or the like. Applications are stored on a non-transitory medium. An example of a non-transitory medium is a non-volatile memory, for example a flash memory or volatile memory, for example RAM. The computer instructions are executed by a suitable processor.

These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A method for reducing video resolution, comprising the steps of processing frames of the video sequence by:

   - creating a details bitmap (D), having values of pixels dependent on the amount of details at a particular area of the video frame;
   - creating a net (N) of regularly distributed nodes and deforming the position of nodes according to the contents of the details bitmap (D) such that the nodes are brought closer to each other at the places wherein the details bitmap (D) indicates higher amount of details;
   - morphing the frame to a modified frame (PB') using morphing based on the net N; and
   - scaling down the modified frame (PB') to obtain a reduced frame (PB").

2. The method according to claim 1, further comprising the steps of:

   - analyzing the input frame (P) of the video sequence to create a motion bitmap (M) having the same resolution as the input frame (P) and values of pixels proportional to the dynamics of movement of pixels of the input frame (P);
   - blurring the input frame (P) such that the amount of blurring particular pixels depends on the values of corresponding pixels of motion bitmap (M) to obtain a blurred frame (PB); and
   - creating the details bitmap (D) based on the blurred frame (PB).

3. The method according to claim 1, wherein the details bitmap (D) is created using a formula:

$$D_{(x,y)} = \sum_{i=1}^{n} \sum_{j=1}^{n} a_{ij} * H_{ij}$$

wherein:

   n is a size of a matrix;
   $H_{i,j}$ is a matrix of FFT coefficients;
   $a_{i,j}$ is a matrix comprising weight coefficients.

**4.** The method according to claim 1, wherein the modified frame (PB') is scaled down to obtain a reduced frame (PB") using a scaling coefficient (kx) for x axis different from a scaling coefficient (ky) for the y axis.

**5.** The method according to claim 1, further comprising compressing the reduced bitmap (PB") to obtain a compressed bitmap PBC.

**6.** A computer program comprising program code means for performing all the steps of the computer-implemented method according to any of claims 1-5 when said program is run on a computer.

**7.** A computer readable medium storing computer-executable instructions performing all the steps of the computer-implemented method according to any of claims 1-5 when executed on a computer.

**8.** A system for s reducing video resolution, the system comprising a controller (303) configured to process frames of the video sequence by:

- creating a details bitmap (D), having values of pixels dependent on the amount of details at a particular area of the video frame;
- creating a net (N) of regularly distributed nodes and deforming the position of nodes according to the contents of the details bitmap (D) such that the nodes are brought closer to each other at the places wherein the details bitmap (D) indicates higher amount of details;
- morphing the frame to a modified frame (PB') using morphing based on the net N; and
- scaling down the modified frame (PB') to obtain a reduced frame (PB").

**Amended claims in accordance with Rule 137(2) EPC.**

**1.** A method for reducing video resolution, comprising the steps of processing frames of the video sequence by:

- creating a details bitmap (D), taking into account, for each pixel of the details bitmap (D), the values of neighboring pixels in order for the bitmap (D) to have values of pixels dependent on the amount of details at a particular area of the video frame;
- creating a net (N) of regularly distributed nodes and deforming the position of nodes according to the contents of the details bitmap (D) such that the nodes are brought closer to each other at places where the details bitmap (D) indicates higher amount of details;
- morphing the frame to a modified frame (PB') using morphing based on the net N whereas the areas with high frequencies are stretched and areas without high frequencies are compacted; and
- scaling down the modified frame (PB') to obtain a reduced frame (PB").

**2.** The method according to claim 1, further comprising the steps of:

- analyzing the input frame (P) of the video sequence to create a motion bitmap (M) having the same resolution as the input frame (P) and values of pixels proportional to the speed of movement of pixels of the input frame (P);
- blurring the input frame (P) such that the amount of blurring particular pixels depends on the values of corresponding pixels of motion bitmap (M) to obtain a blurred frame (PB); and
- creating the details bitmap (D) based on the blurred frame (PB).

**3.** The method according to claim 1, wherein the details bitmap (D) is created using a formula:

$$D_{(x,y)} = \sum_{i=1}^{n} \sum_{j=1}^{n} a_{ij} * H_{ij}$$

wherein:

n is a size of a matrix;
$H_{i,j}$ is a matrix of FFT coefficients;
$a_{i,j}$ is a matrix comprising weight coefficients.

**4.** The method according to claim 1, wherein the modified frame (PB') is scaled down to obtain a reduced frame (PB") using a scaling coefficient (kx) for x axis different from a scaling coefficient (ky) for the y axis.

**5.** The method according to claim 1, further comprising compressing the reduced bitmap (PB") to obtain a compressed bitmap PBC.

**6.** A computer program comprising program code means for performing all the steps of the computer-implemented method according to any of claims 1-5 when said program is run on a computer.

**7.** A computer readable medium storing computer-executable instructions performing all the steps of the computer-implemented method according to any of claims 1-5 when executed on a computer.

**8.** A system for s reducing video resolution, the system comprising a controller (303) configured to process frames of the video sequence by:

- creating a details bitmap (D), taking into account, for each pixel of the details bitmap (D), the values of neighboring pixels in order for the bitmap (D) to have values of pixels dependent on the amount of details at a particular area of the video frame;

- creating a net (N) of regularly distributed nodes and deforming the position of nodes according to the contents of the details bitmap (D) such that the nodes are brought closer to each other at the places wherein the details bitmap (D) indicates higher amount of details;

- morphing the frame to a modified frame (PB') using morphing based on the net N whereas the areas with high frequencies are stretched and areas without high frequencies are compacted; and

- scaling down the modified frame (PB') to obtain a reduced frame (PB").

101 — Perform motion analysis of frame P

102 — Create motion bitmap M

103 — Blur input bitmap P to obtain blurred frame PB

104 — Detect high frequencies in PB

105 — Create details bitmap D

106 — Create net N

107 — Deforrn net N

108 — Convert PB to modified PB' using morphing based on net N

109 — Scale down PB' to reduced PB" using kx and ky

110 — Compress PB" as PBC and store it with kx, ky and N

**Fig. 1**

**201** Read compressed PBC

**202** Decompress PBC
to obtain reduced frame PB"

**203** Scale up PB" using kx, ky
to obtain modified frame PB'

**204** Re-morph PB" using net N
to obtain PB

**205** Display PB

**Fig. 2**

301

302

Memory

303

Controller

304

Input interface

**Fig. 3**

**PB**

|  | x-2 | x-1 | x | x+1 | x+2 |
|---|---|---|---|---|---|
| y-2 |  |  |  |  |  |
| y-1 |  |  |  |  |  |
| y |  |  | ░ |  |  |
| y+1 |  |  |  |  |  |
| y+2 |  |  |  |  |  |

**Fig. 4A**

**FFT** →

**H**

|  | 1 | 2 | 3 | 4 | 5 |
|---|---|---|---|---|---|
| 1 | DC |  |  |  |  |
| 2 |  |  |  |  |  |
| 3 |  |  |  |  |  |
| 4 |  |  |  |  |  |
| 5 |  |  |  |  |  |

**Fig. 4B**

|  | 1 | 2 | 3 | 4 | 5 |
|---|---|---|---|---|---|
| 1 | 1 | 2 | 3 | 4 | 5 |
| 2 | 2 | 3 | 4 | 5 | 6 |
| 3 | 3 | 4 | 5 | 6 | 7 |
| 4 | 4 | 5 | 6 | 7 | 8 |
| 5 | 5 | 6 | 7 | 8 | 9 |

**Fig. 4C**

|  | 1 | 2 | 3 | 4 | 5 |
|---|---|---|---|---|---|
| 1 | 1 | 4 | 9 | 16 | 25 |
| 2 | 4 | 9 | 16 | 25 | 36 |
| 3 | 9 | 16 | 25 | 36 | 49 |
| 4 | 16 | 25 | 36 | 49 | 64 |
| 5 | 25 | 36 | 49 | 64 | 81 |

**Fig. 4D**

**Fig. 4E**

**Fig. 4F**

| Node | x coord | y coord |
|---|---|---|
| 1 | 1 | 1 |
| 2 | 64 | 1 |
| 3 | 128 | 1 |
| 4 | 192 | 1 |
| 5 | 256 | 1 |
| 6 | 320 | 1 |
| 7 | 384 | 1 |
| 8 | 448 | 1 |
| 9 | 512 | 1 |
| 10 | 576 | 1 |
| 11 | 640 | 1 |
| 12 | 704 | 1 |
| 13 | 768 | 1 |
| 14 | 832 | 1 |
| 15 | 896 | 1 |
| 16 | 960 | 1 |
| 17 | 1024 | 1 |
| 18 | 1 | 48 |
| 19 | 64 | 48 |
| 20 | 128 | 48 |
| 21 | 192 | 48 |
| 22 | 256 | 48 |
| 23 | 320 | 48 |
| 24 | 384 | 48 |
| 25 | 448 | 48 |
| 26 | 512 | 48 |

**Fig. 5A**

| Node | x coord | y coord |
|---|---|---|
| 1 | 17 | 16 |
| 2 | 1 | 91 |
| 3 | 128 | 23 |
| 4 | 196 | 18 |
| 5 | 260 | 20 |
| 6 | 326 | 22 |
| 7 | 387 | 18 |
| 8 | 451 | 19 |
| 9 | 515 | 22 |
| 10 | 584 | 22 |
| 11 | 671 | 32 |
| 12 | 730 | 179 |
| 13 | 802 | 66 |
| 14 | 847 | 119 |
| 15 | 895 | 123 |
| 16 | 972 | 117 |
| 17 | 990 | 25 |
| 18 | 40 | 63 |
| 19 | 64 | 55 |
| 20 | 134 | 67 |
| 21 | 197 | 71 |
| 22 | 262 | 69 |
| 23 | 330 | 77 |
| 24 | 392 | 53 |
| 25 | 450 | 76 |
| 26 | 516 | 62 |

**Fig. 5B**

Europäisches
Patentamt

European
Patent Office

Office européen
des brevets

# EUROPEAN SEARCH REPORT

Application Number

EP 14 46 1520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SALEMBIER P ET AL: "VERY LOW BIT RATE VIDEO CODING USING ACTIVE TRIANGULAR MESH", 1996 IEEE INTERNATIONAL CONFERENCE ON ACOUSTICS, SPEECH, AND SIGNAL PROCESSING - PROCEEDINGS. (ICASSP). ATLANTA, MAY 7 - 10, 1996; [IEEE INTERNATIONAL CONFERENCE ON ACOUSTICS, SPEECH, AND SIGNAL PROCESSING - PROCEEDINGS. (ICASSP)], NEW YORK, IEEE, US, vol. CONF. 21, 7 May 1996 (1996-05-07), pages 2060-2063, XP000681654, DOI: 10.1109/ICASSP.1996.545723 ISBN: 978-0-7803-3193-8 | 1,6-8 | INV. G06T9/00 H04N19/59 H04N19/85 H04N19/132 H04N19/182 |
| Y | * the whole document * | 2-5 | |
| Y | HYUNGSUK OH ET AL: "Video Processing for Human Perceptual Visual Quality-Oriented Video Coding", IEEE TRANSACTIONS ON IMAGE PROCESSING, IEEE SERVICE CENTER, PISCATAWAY, NJ, US, vol. 22, no. 4, 1 April 2013 (2013-04-01), pages 1526-1535, XP011498252, ISSN: 1057-7149, DOI: 10.1109/TIP.2012.2233485 | 2,3 | |
| A | * the whole document * | 1,4-8 | |
| Y | US 5 253 059 A (ANSARI RASHID [US] ET AL) 12 October 1993 (1993-10-12) | 4,5 | |
| A | * column 6, line 39 - column 7, line 6; figure 1 * | 1-3,6-8 | |

TECHNICAL FIELDS SEARCHED (IPC)

G06T
H04N

-/--

The present search report has been drawn up for all claims

| Place of search | Date of completion of the search | Examiner |
|---|---|---|
| Munich | 22 August 2014 | Lombardi, Giancarlo |

EPO FORM 1503 03.82 (P04C01)

Europäisches
Patentamt

European
Patent Office

Office européen
des brevets

# EUROPEAN SEARCH REPORT

Application Number

EP 14 46 1520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MUSMANN H G ET AL: "Object-oriented analysis-synthesis coding of moving images", SIGNAL PROCESSING. IMAGE COMMUNICATION, ELSEVIER SCIENCE PUBLISHERS, AMSTERDAM, NL, vol. 1, no. 2, 1 October 1989 (1989-10-01), pages 117-138, XP024241727, ISSN: 0923-5965, DOI: 10.1016/0923-5965(89)90005-2 [retrieved on 1989-10-01] * the whole document * | 1-8 | |
| A | KAWAMURA S ET AL: "Estimation of motion using motion blur for tracking vision system", WORLD AUTOMATION CONGRESS, 2002. PROCEEDINGS OF THE 5TH BIANNUAL JUNE 9-13, 2002, PISCATAWAY, NJ, USA,IEEE, vol. 13, 9 June 2002 (2002-06-09), pages 371-376, XP010616447, ISBN: 978-1-889335-18-6 * pages 372-373, paragraph 2 * | 1-8 | |

TECHNICAL FIELDS
SEARCHED       (IPC)

The present search report has been drawn up for all claims

| Place of search | Date of completion of the search | Examiner |
|---|---|---|
| Munich | 22 August 2014 | Lombardi, Giancarlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 46 1520

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2014

| Patent document cited in search report | Publication date | Patent family member(s) | Publication date |
|---|---|---|---|
| US 5253059 A | 12-10-1993 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013017565 A